**Europäisches Patentamt**

**European Patent Office**

**Office européen des brevets**

(19)

(11) Veröffentlichungsnummer : **0 305 521 B1**

(12) # EUROPÄISCHE PATENTSCHRIFT

(45) Veröffentlichungstag der Patentschrift :
25.09.91 Patentblatt 91/39

(51) Int. Cl.⁵ : **F02F 3/00, F16J 1/06**

(21) Anmeldenummer : **87903476.7**

(22) Anmeldetag : **19.03.87**

(86) Internationale Anmeldenummer :
**PCT/SU87/00032**

(87) Internationale Veröffentlichungsnummer :
**WO 88/07132 22.09.88 Gazette 88/21**

(54) **KOLBEN FÜR VERBRENNUNGSMOTOREN.**

(43) Veröffentlichungstag der Anmeldung :
08.03.89 Patentblatt 89/10

(45) Bekanntmachung des Hinweises auf die
Patenterteilung :
25.09.91 Patentblatt 91/39

(84) Benannte Vertragsstaaten :
DE FR GB IT SE

(56) Entgegenhaltungen :
DE-C- 251 509
GB-A- 160 668

(73) Patentinhaber : KIEVSKY
AVTOMOBILNO-DOROZHNY INSTITUT IMENI
60-LETIA VELIKOI OKTYABRSKOI
SOTSIALISTICHESKOI REVOLJUTSII
ul. Suvorova 1
Kiev, 252610 (SU)

(72) Erfinder : STORCHEVOI, Nikolai Makarovich
ul. Bratislavskaya, 34-174
Kiev, 252156 (SU)

(74) Vertreter : Finck, Dieter et al
Patentanwälte v. Füner, Ebbinghaus, Finck
Mariahilfplatz 2 & 3
W-8000 München 90 (DE)

## Beschreibung

Die Erfindung betrifft einen Kolben für Verbrennungsmotoren mit einem eine Achse aufweisenden Kolbenschaft, mit einer im Kolbenschaft vorgesehen Kolbenbolzenbohrung, die eine Achse aufweist, die senkrecht zur Achse des Kolbenschaftes ist, mit an den Seitenflächen des Kolbenschaftes bezogen auf die Achse der Kolbenbolzenbohrung auf gegenüberliegenden Seiten ausgebildeten Ausnehmungen, die zwei Zylinderflächen mit einer zur Achse des Kolbenschaftes parallelen Achse aufweisen, mit einem in jeder Ausnehmung angeordneten Einsatz, der eine zylindrische Außenfläche, deren Krümmungsradius dem Radius eines Motorzylinders entspricht, mit dessen Oberfläche sie in Kontakt gebracht wird, und der eine zylindrische Innenfläche aufweist, deren Krümungsradius dem Krümmungsradius der Ausnehmung entspricht, und mit jeweils einer in jeder Ausnehmung zwischen dem zugehörigen Einsatz und dem Kolbenschaft angeordneten Feder, deren Federkraft den Einsatz an den Motorzylinder andrückt.

Wenn im Zylinder eines Verbrennungsmotors der Kolben aus seiner koaxialen Stellung bezüglich der Zylinderachse gekippt wird, werden die Kolbenringe zusammengedrückt, wodurch sich zwischen der Zylinderwand und den Kolbenringen Durchlässe bilden, durch die Gase und Dämpfe aus dem Raum zwischen Kolbenboden und Zylinderkopf in den kurbelseitigen Raum des Kolbens gelangen, was die Motorleistung beeinträchtigt. Die Kipptendenz kann dadurch verringert werden, daß das Spiel zwischen Kolben und Zylinder weitgehend verringert wird.

Um bei der Bewegung des Kolbens im Zylinder die koaxiale Zuordnung der Achse des Kolbenschafts und des Zylinders zu gewährleisten, ist es aus der US-A-4158328 bereits bekannt, zwischen dem Kolbenschaft und dem Motorzylinder an der Seitenfläche des Kolbenschafts eine Ausnehmung vorzusehen und darin einen Einsatz aus einem Fluorkunststoff anzuordnen. Der Einsatz hat im Längsschnitt die Form eines Keils, der sich in Richtung vom Boden des Kolbens weg verjüngt. Die Ausnehmung ist länger als der Einsatz, so daß sich dieser längs der Achse des Kolbenschafts zwischen zwei Endstellungen verschieben kann. In den Endstellungen ist zwischen der Stirnseite des Einsatzes und der Ausnehmung jeweils ein Spalt vorhanden.

Dieser Spalt kann dadurch vermieden werden, daß der Kolben bei der Bewegung vom unteren Totpunkt zum oberen Totpunkt den Einsatz im Spalt verkeilt, während er bei der Bewegung in der entgegengesetzten Richtung die Verkeilungswirkung aufhebt. Dabei bildet sich jedoch zwischen Kolbenschaft, Einsatz und Zylinder ein Spalt, der ein Kippen des Kolbens begünstigt, wodurch sein Verschleiß erhöht und somit seine Einsatzzeit verringert wird. Außerdem nimmt die Dicke des Einsatzes während des Betriebs durch Abnutzung ab. Dadurch verkleinert sich der Zwischenraum zwischen dem Einsatz und der unteren Stirnseite der Ausnehmung allmählich, wodurch die Funktionsfähigkeit des Einsatzes mit der Zeit verloren geht.

Der gattungsgemäße Kolben, der aus der DE-A-393755 bekannt ist, weist einen Einsatz auf, der einen Spalt zwischen Kolbenschaft und Zylinder unabhängig von der Bewegungsrichtung des Kolbens ausschließt. Der Einsatz hat über seinen Querschnitt eine gleichförmige Dicke, da er von den Bögen zweier konzentrischer Kreise begrenzt ist. Der Einsatz ist in der Ausnehmung unter Bildung eines Spalts zwischen seiner Innenfläche und der Oberfläche der Ausnehmung angeordnet. Der Einsatz und die Ausnehmung haben die gleiche Länge, wodurch ein Verschieben des Einsatzes in der Ausnehmung relativ zum Kolbenschaft längs seiner Achse begrenzt ist. Der Einsatz ist mit dem Kolbenschaft durch einen Stift verbunden, wodurch eine Drehung des Einsatzes um die Achse des Kolbenschaftes vermieden wird. Die Federn sind so angeordnet, daß ihre Achsen radial verlaufen, wodurch die dadurch radial gerichtete Federkraft den Einsatz an die Zylinderwände andrückt. Der Einsatz kann sich also nur in radialer Richtung verschieben und dadurch den Spalt zwischen Kolbenschaft und Zylinder beseitigen, wodurch die koaxiale Positionierung von Kolben und Zylinder während der Kolbenbewegung gewährleistet ist und ein Kippen des Kolbens weitgehend unterbunden wird.

Die von der Feder bei der gewählten Anordnung aufzubringende Kraft muß den auf den Kolben ausgeübten Seitendruck übersteigen. Obwohl die am Kolben angreifenden Seitenkräfte vier- bis fünfmal kleiner sind als die in Achsrichtung auf den Kolben wirkende Kraft, sind die Seitenkräfte relativ hoch. Als Federn müssen deshalb Druckfedern mit hoher Steifigkeit verwendet werden. Mit der Zeit nimmt jedoch die auf den Einsatz wirkende Druckkraft der Feder mit fortschreitendem Verschleiß des Einsatzes stark ab, was die Nutzungsdauer des Kolbens verringert. Dabei wird der Spalt zwischen dem Einsatz und der Oberfläche der Ausnehmung größer, was die Kippneigung des Kolbens vergrößert.

Die der Erfindung zugrundeliegende Aufgabe besteht deshalb darin, den Kolben der gattungsgemäßen Art so auszugestalten, daß die Ausbildung eines Spaltes zwischen Kolbenschaft und Zylinder unabhängig vom Verschleißgrad des Einsatzes und des Zylinders während des Betriebs des Verbrennungsmotors und somit ein Kippen des Kolbens ausgeschlossen bleibt.

Diese Aufgabe wird ausgehend von dem Kolben der gattungsgemäßen Art dadurch gelöst, daß jeder Einsatz im Querschnitt die Form eines gebogenen Keils aufweist, daß der maximale Keilwinkel des gebogenen Keils nicht größer ist als der Reibungswinkel aus der Werkstoffpaarung Einsatz und Motorzylinder, daß die Achse der Ausnehmung, deren Zylinderfläche mit der Innenfläche des zugehörigen Einsatzes in Kontakt steht, von der Achse des Kolbenschaftes auf der Achse der Kolbenbolzenbohrung in Verjüngungsrichtung des gebogenen Keils um eine Entfernung versetzt ist, die dem Produkt aus dem Krümmungsradius der Innenfläche des Einsatzes und dem maximalen Keilwinkel in rad. gleich ist, und daß jede Feder so angeordnet ist, daß der Winkel zwischen ihrer Kraftrichtung und einer Tangente an die Innenfläche des zugehörigen Einsatzes im Angriffspunkt der Federkraft in Verjüngungsrichtung des gebogenen Keils kleiner als 90° ist.

Aufgrund der erfindungsgemäßen Ausgestaltung des Einsatzes als krummliniger Keil ist es anglich, die Bildung eines Spalts zwischen Kolbenschaft und Zylinder unabhängig vom Verschleiß des Einsatzes und des Zylinders vollständig auszuschließen, weil sich der Einsatz bei seiner Abnutzung unter Wirkung der Feder um die Achse des Kolbenschaftes auf der Oberfläche der Ausnehmung herum verschiebt, wodurch ein Kippen des Kolbens unterbunden wird. Dadurch, daß der maximale Keilwinkel des Einsatzes dem Reibungswinkel der Werkstoffpaarung Einsatz und Motorzylinder nicht übersteigt, ist für dieses Verschieben bzw. Drehen des Einsatzes nur eine geringe Kraft erforderlich, was die Verwendung von Federn mit geringerer Steifigkeit ermöglicht. Dabei können die Anforderungen an die Festigkeitseigenschaften des Materials des Einsatzes verringert und seine Gleiteigenschaften gesteigert werden. Für den Kolben kann ein äußerst festes und hitzebeständiges Material eingesetzt werden. Dadurch läßt sich die Nutzungsdauer eines solchen Kolbens gegenüber bekannten Kolben um mindestens das fünffache verlängern.

Anhand einer Zeichnung wir ein Ausführungsbeispiel der Erfindung näher erläutert. Es zeigt :

Fig. 1      einen Kolben mit einer teilweise axial geschnittenen Seitenansicht und

Fig. 2      den Schnitt II-II von Fig. 1

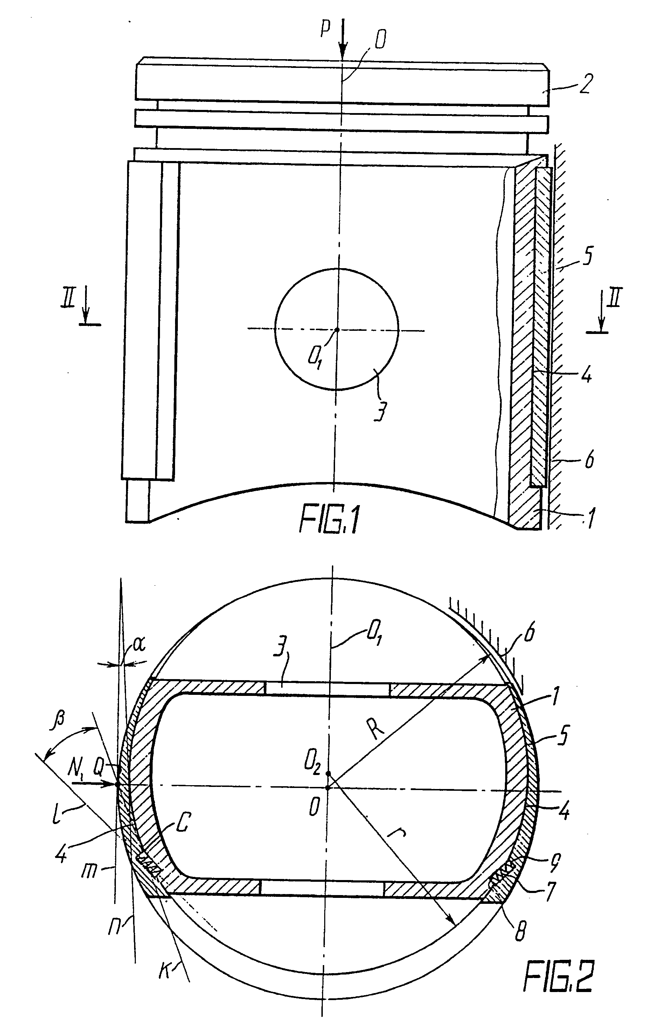

Der in der Zeichnung gezeigte Kolben eines Verbrennungsmotors hat einen Kolbenschaft 1 (Fig. 1) mit einem Kopf 2, an dessen äußerer Seitenfläche zwei Abschnitte mit zylindrischer Form vorhanden sind, die eine gemeinsame Achse O besitzen, die mit der Achse des Kolbenschaftes 1 zusammenfällt. Im Kolbenschaft 1 ist in seinem mittleren Teil eine Kolbenbolzenbohrung 3 vorgesehen, deren Achse $O_1$ zur Achse O des Kolbenschaftes 1 senkrecht ist. An der Außenfläche des Kolbenschaftes 1 sind auf den bezüglich der Achse $O_1$ gegenüberliegenden Seiten zwei Ausnehmungen 4 ausgebildet. In jeder Ausnehmung 4 ist ein Einsatz 5 angeordnet. Die Länge jedes Einsatzes 5 ist gleich der Länge der Ausnehmung 4.

Der Einsatz 5 (Fig. 2) besitzt eine konvexe zylindrische Außenfläche, die mit der Innenfläche eines in Fig. 1 und 2 nur angedeuteten Motorzylinders 6 in Kontakt steht. Der Krümmungsradius R der Außenfläche des Einsatzes 5 ist gleich dem Radius des Motorzylinders 6. Die mit der Oberfläche der Ausnehmung 4 in Kontakt stehende Innenfläche des Einsatzes 5 ist konkav, wobei der Krümmungsradius r der Innenfläche des Einsatzes 5 zum Krümmungsradius der Oberfläche der Ausnehmung 4 gleich ist.

Zwischen dem Einsatz 5 und dem Kolbenschaft 1 ist eine als Druckfeder wirkende Feder 7 (Fig. 2) angeordnet, die sich mit ihrem einen Ende an einer im Kolbenschaft 1 ausgebildeten Stufe 8 abstützt und mit ihrem anderen Ende gegen eine im Einsatz 5 ausgebildete Stufe 9 drückt.

Der Einsatz 5 weist im Querschnitt die Form eines gebogenen Keils auf, wobei sein maximaler Keilwinkel α den Reibungswinkel der Werkstoffpaarung — Einsatz 5 und Motorzylinder 6 — nicht übersteigt, jedoch seine Selbsthemmung in der Ausnehmung 4 unter Einwirkung der Komponente N der Belastung P gewährleistet. Der Keilwinkel α ist ein Winkel zwischen Tangenten m und n an die Außenfläche bzw. die Innenfläche des Einsatzes 5 im Angriffspunkt Q der seitlichen Komponente N einer Kraft P (Fig. 1), die auf den Kolben entlang der Achse O wirkt. Ist der Keilwinkel α größer als der Reibungswinkel der Werkstoffpaarung, so wird der Einsatz 5 unter Einwirkung der Komponente N selbsttätig aus der Ausnehmung 4 ausgestoßen, was den Einbau einer Feder 7 mit erhöhter Steifigkeit erfordern würde.

Bei der Wahl des Keilwinkels α des Einsatzes 5 sind die Art der Belastung, wie gleichmäßig verteilte Belastung oder Einzellast, und der Charakter der Belastung, nämlich Dauer-, Schwellbelastung, Wechsellast, zu berücksichtigen.

Der Einsatz 5 besteht aus einem Material mit hohen Gleiteigenschaften, beispielsweise aus einem metallkeramischem Werkstoff oder einem Fluorkunststoff. Der maximale Reibungswinkel für die meisten Werkstoffpaarungen beträgt ungefähr 6°.

Zweckmäßigerweise ist der gewählte Keilwinkel kleiner als der Reibungswinkel der Reibpaarung. Für die Paarung "Kolben — Zylinder" ist eine Reibungszahl in den Grenzen zwischen 0,07 und 0,085 günstig, was einem Reibungswinkel von 4 bis 5° entspricht.

Wenn aus konstruktiven Rücksichten ein anderer Reibungswinkel gewählt wird, müssen solche Schmierungsbedingungen und eine solche Oberflächenrauhigkeit geschaffen und die Federkraft so gerichtet werden, daß bei der Arbeit des Kolbens unter der Wirkung der Belastung die Selbsthemmung des Einsatzes 5 in der Ausnehmung 4 sichergestellt wird.

3

Die Innenflätze der Einsätze 5 stehen in Kontakt mit den Zylinderflächen der Ausnehmungen 4, welche eine gemeinsame zur Achse O des Kolbenschaftes 1 parallele Achse $O_2$ besitzen. Die Achse $O_2$ der Ausnehmungen 4 ist zu der Achse O des Kolbenschaftes 1 auf der Achse $O_1$ der Kolbenbolzenbohrung 3 in der Verjüngungsrichtung des gebogenen Keils um einen Abstand versetzt, der dem Produkt aus dem Radius r der Ausnehmung 4 und aus dem maximalen Keilwinkel $\alpha$ gleich ist, d.h. der Abstand $\overline{O_2O} = r. \alpha$, worin $\alpha$ in Radianten ausgedrückt ist, weil für die kleinen Winkel innerhalb des Reibungswinkels tg $\alpha \approx \alpha$ ist. Auf diese Weise hat die Ausnehmung 4 im Querschnitt eine Form, die zur Form des Einsatzes 5 komplementär ist. Die Feder 7 ist so angeordnet, daß ein Winkel $\beta$ zwischen ihrer Kraftrichtung 1 und einer Tangente k an die Innenfläche des Einsatzes 5 im Kraftangriffspunkt, das heißt im Punkt "C" des Kontaktes der Feder 7 mit der Innenfläche des Einsatzes 5, stets kleiner als 90° ist, was ein Verschieben des Einsatzes 5 je nach Verschleiß in der Ausnehmung 4 in Richtung der Verjüngung des gebogenen Keils gewährleistet.

Bei der hin- und hergehenden Bewegung des Kolbenschaftes 1 im Motorzylinder 6 beseitigt der in der Ausnehmung 4 befindliche Einsatz 5 unter Einwirkung der Feder 7 den Spalt zwischen dem Kolbenschaft 1 und dem Zylinder 6 und steht auf seiner gesamten Außenfläche mit der Innenfläche des Zylinders 6 und auf seiner gesamten Innenfläche mit der Oberfläche der Ausnehmung 4 des Kolbenschaftes 1 in Kontakt. Der Einsatz 5 verschiebt sich dabei in der Ausnehmung 4 in der Längsrichtung, d.h. entlang der Achse O des Kolbenschaftes 1, nicht. Daher ist nur seine Außenfläche einem Verschleiß unterworfen, welche sich relativ zur Innenfläche des Zylinders 6 bei der Kolbenbewegung verschiebt.

Auch bei einem Verschleiß des Einsatzes 5 bildet sich kein Spalt zwischen dem Einsatz 5 und dem Zylinder 6, weil die Feder den Einsatz 5 stets verschiebt, indem sie ihn in der Ausnehmung 4 in Richtung der Verjüngung vorrückt und den Einsatz 5 an den Zylinder 6 andrückt, wodurch eine Bewegung des Kolbens im Zylinder 6 ohne Kippen sichergestellt wird. Dabei ist die Kraft der Feder 7 größer als die Kraft der Reibung des Einsatzes 5 am Kolbenschaft 1, jedoch im Vergleich mit der Reibungskraft zwischen dem Zylinder 6 und der Außenfläche des Einsatzes 5 gering.

## Patentansprüche

1. Kolben für Verbrennungsmotoren
— mit einem eine Achse (O) aufweisenden Kolbenschaft (1),
— mit einer im Kolbenschaft (1) vorgesehenen Kolbenbolzenbohrung (3), die eine Achse ($O_1$) aufweist, die senkrecht zur Achse (O) des Kolbenschaftes (1) ist,
— mit an den Seitenflächen des Kolbenschaftes (1) bezogen auf die Achse ($O_1$) der Kolbenbolzenbohrung (3) auf gegenüberliegenden Seiten ausgebildeten Ausnehmungen (4), die zwei Zylinderflächen mit einer zur Achse (O) des Kolbenschaftes (1) parallelen Achse ($O_2$) aufweisen,
— mit einem in jeder Ausnehmung (4) angeordneten Einsatz (5),
— der eine zylindrische Außenfläche aufweist, deren Krümmungsradius dem Radius eines Motorzylinders (6) entspricht, mit dessen Oberfläche sie in Kontakt gebracht wird, und
— der eine zylindrische Innenfläche hat, deren Krümmungsradius dem Krümmungsradius der Ausnehmung (4) entspricht, und
— mit jeweils einer in jeder Ausnehmung (4) zwischen dem zugehörigen Einsatz (5) und dem Kolbenschaft (1) angeordneten Feder (7), deren Federkraft den Einsatz (5) an den Motorzylinder (6) andrückt, dadurch **gekennzeichnet,**
— daß jeder Einsatz (5) im Querschnitt die Form eines gebogenen Keils aufweist,
— daß der maximale Keilwinkel ($\alpha$) des gebogenen Keils nicht größer ist als der Reibungswinkel aus der Werkstoffpaarung Einsatz (5) und Motorzylinder (6),
— daß die Achse ($O_2$) der Ausnehmung (4), deren Zylinderfläche mit der Innenfläche des zugehörigen Einsatzes (5) in Kontakt steht, von der Achse (O) des Kolbenschaftes (1) auf der Achse ($O_1$) der Kolbenbolzenbohrung (3) in Verjüngungsrichtung des gebogenen Keils um eine Entfernung versetzt ist, die dem Produkt aus dem Krümmungsradius (r) der Innenfläche des Einsatzes (5) und dem maximalen Keilwinkel ($\alpha$) gleich ist, und
— daß jede Feder (7) so angeordnet ist, daß der Winkel (ß) zwischen ihrer Kraftrichtung (1) und einer Tangente (k) an die Innenfläche des zugehörigen Einsatzes (5) im Angriffspunkt (C) der Federkraft in Verjüngungsrichtung des gebogenen Keils kleiner als 90° ist.

EP 0 305 521 B1

## Claims

1. A piston for internal combustion engines
— having a piston shaft (1) comprising an axle (O),
— having a piston-pin bore (3) which is provided in the piston shaft (1) and which has an axle (O$_1$) at right angles to the axle (O) of the piston shaft (1),
— having recesses (4) which are formed on the lateral faces of the piston shaft (1) on opposite sides relative to the axle (O$_1$) of the piston-pin bore (3) and which comprise two cylindrical faces with an axle (O$_2$) parallel to the axle (O) of the piston shaft (1),
— having an insert (5) which is arranged in each recess (4) and
— which has a cylindrical outer face — the radius of curvature of which corresponds to the radius of an engine cylinder (6) and which is brought into contact with the surface of the latter — and
— which has a cylindrical inner face, the radius of curvature of which corresponds to the radius of curvature of the recess (4), and
— having in each case a spring (7) which is arranged in each recess (4) between the associated insert (5) and the piston shaft (1) and the force of which presses the insert (5) against the engine cylinder (6), characterized in that
— each insert (5) has in cross-section the shape of a curved wedge,
— the maximum angle ($\alpha$) of the curved wedge is not greater than the angle of friction of the material coupling of the insert (5) and the engine cylinder (6),
— the axle (O$_2$) of the recess (4), the cylindrical face of which is in contact with the inner face of the associated insert (5), is offset from the axle (O) of the piston shaft (1) on the axle (O$_1$) of the piston-pin bore (3) in the inward tapering direction of the curved wedge by a distance which is equal to the product of the radius of curvature (r) of the inner face of the insert (5) and the maximum wedge angle ($\alpha$), and
— each spring (7) in arranged in such a way that the angle ($\beta$) between its direction of force (1) and a tangent (k) on the inner face of the associated insert (5) at the engagement point (C) of the spring force in the inward tapering direction of the curved wedge is less than 90°.

## Revendications

1. Piston pour moteurs à combustion interne
— avec un corps de piston (1) présentant un axe (O),
— avec un alésage d'axe de piston (3) prévu dans le corps de piston (1) et qui comporte un axe (O$_1$) qui est perpendiculaire à l'axe (O) du corps de piston (1),
— avec des évidements (4) réalisés dans les surfaces latérales du corps de piston (1) sur des côtés opposés par rapport à l'axe (O$_1$) de l'alésage d'axe de piston (3), qui comportent deux surfaces cylindriques avec un axe (O$_2$) parallèle à l'axe (O) du corps de piston (1),
— avec une pièce d'insertion (5) disposée dans chaque évidement (4),
— laquelle présente une surface extérieure cylindrique dont le rayon de courbure correspond au rayon d'un cylindre de moteur (6) avec la surface duquel elle est mise en contact, et
— laquelle a une surface intérieure cylindrique dont le rayon de courbure correspond au rayon de courbure de l'évidement (4), et
— avec un ressort (7), monté respectivement dans chaque évidement (4) entre la pièce d'insertion associée (5) et le corps de piston (1), dont la force de ressort presse la pièce d'insertion (5) contre le cylindre de moteur (6), caractérisé
— en ce que chaque pièce d'insertion (5) présente, en section transversale, la forme d'un coin,
— en ce que l'angle maximal de coin ($\alpha$) du coin arqué n'est pas plus grand que l'angle de frottement résultant du couple de matériaux pièce d'insertion (5) et cylindre de moteur (6),
— en ce que l'axe (O$_2$) de l'évidement (4), dont la surface cylindrique est en contact avec la surface interne de la pièce d'insertion associée (5), est décalé, depuis l'axe (O) du corps de piston (1) sur l'axe (O$_1$) de l'alésage d'axe de piston (3) dans le sens d'amincissement du coin arqué, sur une distance qui est égale au produit du rayon de courbure (r) de la surface interne de la pièce d'insertion (5) et de l'angle de coin maximal ($\alpha$), et
— en ce que chaque ressort (7) est monté de telle façon que l'angle ($\beta$), entre sa direction de force (1) et une tangente (k) à la surface interne de la pièce d'insertion associée (5), est inférieur à 90° au point d'attaque (C) de la force de ressort dans le sens d'amincissement du coin arqué.

5

FIG.1

FIG.2